# EUROPÄISCHE PATENTSCHRIFT

(11) **EP 4 307 543 B1**
(45) Veröffentlichungstag und Bekanntmachung des Hinweises auf die Patenterteilung: **22.01.2025**
(21) Anmeldenummer: 23172933.6
(22) Anmeldetag: 11.05.2023
(51) Int. Cl.: H02K 15/04, H01F 41/077, H01F 41/098

(54) **VEREINFACHTE HERSTELLUNG VON SPULEN AUS FLACHDRAHT**
SIMPLIFIED PRODUCTION OF FLAT WIRE COILS
FABRICATION SIMPLIFIÉE DE BOBINES DE FIL PLAT

(30) Priorität: 13.07.2022 DE 102022207157
(43) Veröffentlichungstag der Anmeldung: 17.01.2024
(73) Patentinhaber: Volkswagen Aktiengesellschaft, 38440 Wolfsburg (DE)
(72) Erfinder: Rüsch, Dr. Sönke, 34225 Baunatal (DE); Koch, Jonas, 34253 Lohfelden (DE)

(56) Entgegenhaltungen:
- DE-A1- 102014 000 636
- JP-A- 2014 230 484
- US-A1- 2010 000 624
- US-A1- 2010 026 133

## Beschreibung

Die Erfindung betrifft ein Verfahren zum Herstellen einer Spulenwindung bzw. Spulenwicklung, insbesondere in Form von Flachdraht. Des Weiteren betrifft die Erfindung eine Flachdraht-Spule.

Im Entwicklungsbereich elektrischer Hochleistungsmaschinen ist die Verwendung von Spulen mit flachem Querschnitt bzw. von Flachdraht vorteilhaft. Im Vergleich zur Wicklung mit einem Runddraht bzw. einem Draht mit einem runden Querschnitt kann der Nutfüllfaktor und damit der Wirkungsgrad maximiert werden. Problematisch ist bisher die Großserienherstellung von Spulen mit Flachdraht. Es sind bereits Verfahren bekannt, bei welchen Flachdraht-Spulen durch Gießen oder Fügen aus gepressten Einzelteilen hergestellt werden.

Aus der DE 10 2014 000 636 A1 ist ein weiteres Verfahren zum Herstellen von Spulen aus Flachdraht bekannt, bei dem eine Druckumformung in einer Gesenkvorrichtung erfolgt. Hierzu wird die Spule mit einem Runddraht vollständig gewickelt und anschließend in der Gesenkvorrichtung verpresst, um eine Spule mit mehreren Wicklungen aus Flachdraht zu erhalten. Derartige Verfahren sind jedoch aufwändig, kostenintensiv und prozesstechnisch unsicher, da die jeweiligen Wicklungen nach dem Verpressen zusammenkleben, eine voneinander abweichende Form sowie Querschnittsverteilung aufweisen. Generell ist die Steuerung der resultierenden Querschnitte mehrerer Lagen von Flachdraht bei gleichzeitiger Pressung wegen der ungleichen Kraftverteilung und Toleranzabweichungen beim Rohdraht bzw. Zuführdraht nicht möglich. Aus der DE 10 2013 012 659 A1 ist ebenfalls ein Verfahren bekannt, bei dem mehrere Spulenwindungen gleichzeitig verpresst werden, um eine Spule aus Flachdraht herzustellen.

Die JP 2014 230 484 A betrifft eine Formspule zum Herstellen einer selbsttragenden Luftspalt-Wicklung, insbesondere Schrägwicklung, eines Elektro-Kleinmotors aus mindestens zwei sich an einem Umfang der Wicklung überlappend angeordneten Formspulen, umfassend mindestens eine Windung aus einem elektrisch leitenden Drahtelement. Es sind zwei in unterschiedlichen, radialen Ebenen liegende Formspulseiten ausgebildet, die an ihren Stirnenden über Stirnverbindungen miteinander verbunden sind.

Aus der DE 10 2014 000 636 A1 ist ein Verfahren zum Herstellen einer elektrotechnischen Spule bekannt, wobei die elektrotechnische Spule aus einem einen vorgewickelten Wicklungsverbund aufweisenden Halbzeug ausgebildet wird, das durch Druckumformung in die endgültige Gestalt der elektrotechnischen Spule umgeformt wird.

Die US 2010 026 133 A1 beschreibt ein Spulenherstellungsverfahren, mittels dessen der Füllfaktor eines rechteckförmigen Leiters in einem Schlitz eines Statorkerns verbesserbar ist. Dabei wird eine Oberfläche eines rechteckförmigen Leiters in Kontakt mit einer Welle mit einer Führung gebracht, und ein Hochkantbiegen wird entlang der gekrümmten Oberfläche der Welle durchgeführt, wobei ein Verformungsmechanismus zur Verringerung der Plattendicke eines in der Dicke geänderten Abschnitts entsprechend jeder der vier Ecken einer Spule über die gesamte Breite des rechteckförmigen Leiters vorgesehen ist.

Die US 2010 000 624 A1 betrifft ein Verfahren zum Biegen umfassend einen Rückhaltemechanismus zum Zurückhalten eines Drahtes mit rechteckigem Querschnitt mit langen Seiten und kurzen Seiten in einer solchen Weise, dass eine Oberfläche des Drahtes einschließlich der langen Seite zu drücken und den Draht in Kontakt mit einer Oberfläche des Drahtes einschließlich der kurzen Seite zu halten möglich wird, wobei eine äußere Führung und ein Drehmechanismus zum Biegen des Drahtes mit rechteckigem Querschnitt an den Kanten vorgesehen ist.

Der Erfindung liegt die Aufgabe zugrunde, ein Verfahren zum Herstellen von Spulen aus Flachdraht zu schaffen, welches präzise und technisch einfach umsetzbar ist. Diese Aufgabe wird durch die im Anspruch 1 angegebenen Merkmale gelöst. Weitere vorteilhafte Ausgestaltungen der Erfindung sind in den Unteransprüchen beschrieben.

Gemäß einem Aspekt der Erfindung wird ein Verfahren zum Herstellen einer Spulenwindung, insbesondere in Form von Flachdraht bereitgestellt. In einem Schritt wird ein Zuführdraht in eine umlaufende Form oder umlaufende Kavität eines Unterwerkzeugs unter Ausbildung einer halben Spulenwindung angeordnet. Der Zuführdraht ist vorzugsweise ein Runddraht bzw. ein Draht mit einem runden oder kreisförmigen Querschnitt. Je nach Ausgestaltung kann der Zuführdraht eine beliebige Querschnittsform aufweisen.

Das Unterwerkzeug kann vorzugsweise eine Form aufweisen, welche im Wesentlichen einer Außenform und einem Volumen einer zu fertigenden Spule entspricht. Insbesondere kann das Unterwerkzeug im Zusammenwirken mit einem Oberwerkzeug eine Gesenkvorrichtung ausbilden.

Das Unterwerkzeug ist vorzugsweise drehbar ausgestaltet, sodass ein in das Unterwerkzeug eingesetzter bzw. positionierter Zuführdraht durch eine Drehbewegung des Unterwerkzeugs in der Form des Unterwerkzeugs aufgewickelt bzw. von einer Zuführrolle des Zuführdrahts abgewickelt werden kann.

Durch die Drehbewegung des Unterwerkzeugs kann der Zuführdraht in der Form bzw. einer Kavität oder Nut des Unterwerkzeugs entsprechend einem Verlauf der Kavität vorgebogen werden und somit beispielsweise in eine Kurvenform oder eine Kantenform im Wesentlichen unter Beibehaltung des ursprünglichen Querschnitts gebogen werden.

Die Drehbewegung des Unterwerkzeugs kann beispielsweise entlang einer Drehachse erfolgen, welche im Wesentlichen orthogonal zu einer Zuführrichtung des Zuführdrahts ausgerichtet ist. Je nach Ausgestaltung kann die Zuführrichtung in einem Winkel gegenüber der Drehachse gerichtet sein.

In einem weiteren Schritt wird die durch den Zuführdraht ausgebildete halbe Spulenwindung durch das Oberwerkzeug zu einem Windungsabschnitt quer zur Zuführrichtung des Zuführdrahtes umgeformt. Diese Umformung kann im Wesentlichen parallel zur Drehachse des Unterwerkzeugs umgesetzt werden und somit dem abgewickelten und in der Form positionierten Zuführdraht einen Endquerschnitt aufprägen.

Nach dem Pressen wird das Oberwerkzeug vom Unterwerkzeug beabstandet. Das Oberwerkzeug kann hierbei stationär bzw. drehfest angeordnet sein und lediglich für die Umformung oder das Pressen zuständig sein. Anschließend wird der Zuführdraht unter Ausbildung einer weiteren halben Spulenwindung in die umlaufende Kavität des Unterwerkzeugs angeordnet. Das Oberwerkzeug kann anschließend dem angeordneten Zuführdraht einen finalen Querschnitt aufprägen bzw. diesen verpressen.

Für die Ausbildung einer vollständigen Spulenwindung wird der Zuführdraht um eine halbe Wicklung abgewickelt, durch das Oberwerkzeug verpresst, erneut um eine halbe Wicklung abgewickelt und erneut durch das Oberwerkzeug verpresst. Diese Schritte können beliebig wiederholt werden, um eine gewünschte Wicklungszahl der Spule zu realisieren.

Gemäß einem weiteren Aspekt der Erfindung wird eine Spule bereitgestellt, welche mindestens eine Spulenwindung bzw. Spulenwicklung aufweist, welche durch ein erfindungsgemäßes Verfahren hergestellt ist. Eine derartige Spule kann aus mehreren nacheinander hergestellten Windungsabschnitten ausgebildet werden, wobei zwei aufeinanderfolgende Windungsabschnitte eine Spulenwindung ausbilden. Die jeweiligen Windungsabschnitte gehen dabei ununterbrochen ineinander über und bleiben integral bzw. stoffschlüssig miteinander verbunden.

Das Verfahren kann als ein kontinuierlicher Prozess zur Herstellung einer ganzen Spule aus Flachdraht ausgestaltet sein, welcher keine Fügevorgänge erfordert. Durch die gezielte Umformung von einzelnen Lagen von Zuführdraht kann der finale Querschnitt des Windungsabschnitts präzise eingestellt werden. Eine derartige Spule aus Flachdraht kann technisch robust und kosteneffizient hergestellt werden.

Bei einer vorteilhaften Ausgestaltung kann der Zuführdraht durch Abstandshalter oder Isolierlagen von benachbarten Windungsabschnitten beabstandet in der Form des Unterwerkzeugs angeordnet werden. Somit können zusätzliche Eigenschaften bei der Spulenherstellung berücksichtigt werden.

Die Herstellung der Spulenwindung kann weiter vereinfacht werden, wenn der Zuführdraht in die umlaufende Kavität des Unterwerkzeugs unter Ausbildung einer halben Spulenwindung durch eine Drehung des Unterwerkzeugs geführt oder gezogen wird. Durch diese Maßnahme dient das Unterwerkzeug gleichzeitig als Antrieb für das Abwickeln des Zuführdrahts, sodass gesonderte Aktuatoren und Antriebe für das Zuführen des Zuführdrahts entfallen können.

Gemäß einem weiteren Ausführungsbeispiel wird das Umformen durch das Oberwerkzeug in Form einer Kaltumformung durchgeführt. Vorteilhafterweise wird für das Umformen durch das Oberwerkzeug ein unter dem Zuführdraht bereits umgeformter Windungsabschnitt oder ein Abschnitt des Unterwerkzeugs als Widerlager verwendet. Durch diese Maßnahme kann ein bereits verfestigter Windungsabschnitt oder ein fester Untergrund des Unterwerkzeugs als Widerlager für die Umformung des Zuführdrahts verwendet werden. Durch diese Maßnahme kann der resultierende Querschnitt des Windungsabschnitts, welcher durch die Umformung des Zuführdrahts entsteht, wiederholt präzise hergestellt werden.

Die Verfahrensschritte können dazu verwendet werden, beliebig große Spulen herzustellen, wenn das Zuführen oder Einziehen des Zuführdrahts und das Umformen des Zuführdrahts bis zum Fertigstellen einer Spule wiederholt wird. Durch diese Maßnahme können lediglich die Abmessung der Form des Unterwerkzeugs und die Abmessungen des Oberwerkzeugs als limitierender Faktor für die Spulengröße fungieren.

Nach einer weiteren Ausführungsform wird durch das Umformen ein flacher Querschnitt des Windungsabschnitts, insbesondere mit einer quadratischen Form oder ovalen Form oder Trapezform, eingestellt. Je nach Form und Querschnitt des Oberwerkzeugs können flexibel Querschnitte des Windungsabschnitts gewählt werden, die dem Zuführdraht in entsprechenden Umformschritten aufgeprägt werden.

Die finale Querschnittsverteilung des Windungsabschnitts und/oder der Spule kann flexibel eingestellt werden, wenn eine konstante oder variable Querschnittsfläche des mindestens einen Windungsabschnitts durch das Umformen mittels des Oberwerkzeugs eingestellt wird.

Bei einem weiteren Ausführungsbeispiel wird das Umformen durch das Oberwerkzeug mit oder ohne einen Schmierstoff ausgeführt. Bevorzugterweise wird der Zuführdraht aus Aluminium oder aus Kupfer oder aus Stahl oder aus einer Metalllegierung unter Ausbildung einer halben Spulenwindung in der umlaufenden Form des Unterwerkzeugs angeordnet. Diese Maßnahmen ermöglichen weitere Freiheitsgrade und Eigenschaften bei der Umsetzung einer Herstellungsvorrichtung sowie der Spule.

Die mindestens eine Spulenwindung kann technisch besonders einfach hergestellt werden, wenn das Oberwerkzeug und das Unterwerkzeug als ein Gesenk bzw. eine Gesenkvorrichtung ausgestaltet sind.

Nachfolgend werden Ausführungsbeispiele der Erfindung anhand der Zeichnungen näher erläutert. Es zeigen:
- Fig. 1A, 1B: Darstellungen einer Gesenkvorrichtung zum Veranschaulichen eines Verfahrens zum Herstellen einer Spulenwindung gemäß einer erfindungsgemäßen Ausführungsform,
- Fig. 2A, 2B: Details der Gesenkvorrichtung aus Fig. 1, und
- Fig. 3A - 3E: perspektivische Darstellungen eines Unterwerkzeugs zum Veranschaulichen des Verfahrens zum Herstellen einer Spulenwindung gemäß der erfindungsgemäßen Ausführungsform.

In den Figuren weisen dieselben konstruktiven Elemente jeweils dieselben Bezugsziffern auf.

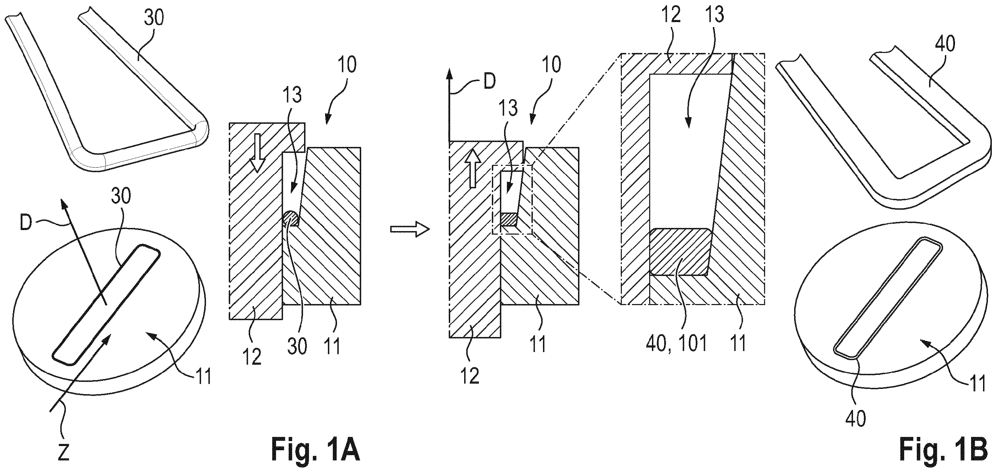

Die Fig. 1A und Fig. 1B zeigen Darstellungen einer Gesenkvorrichtung 10 zum Veranschaulichen eines Verfahrens zum Herstellen einer Spulenwindung 101, 102, 103 gemäß einer erfindungsgemäßen Ausführungsform. Dabei ist in der Fig. 1A ein erster Schritt des Verfahrens gezeigt, bei dem ein Zuführdraht 30 in eine umlaufende Kavität (13) eines Unterwerkzeugs 11 der Gesenkvorrichtung 10 unter Ausbildung einer halben Spulenwindung 101 angeordnet wird. Die Fig. 1A zeigt dabei den durch das Unterwerkzeug 11 vorgebogenen Zuführdraht 30 mit einem runden Querschnitt. Darüber hinaus ist das Unterwerkzeug 11 in einem Querschnitt mit einem Oberwerkzeug 12 der Gesenkvorrichtung 10 illustriert, um die Wirkungsweise zu verdeutlichen.

Das Unterwerkzeug 11 weist eine umlaufende Kavität 13 mit einem im Wesentlichen rechteckigen Verlauf auf. Die Ränder bzw. Kanten der Form 13 sind abgerundet. In der Fig. 1B ist der Querschnitt der Form 13 bzw. der Kavität in einer Detailansicht illustriert.

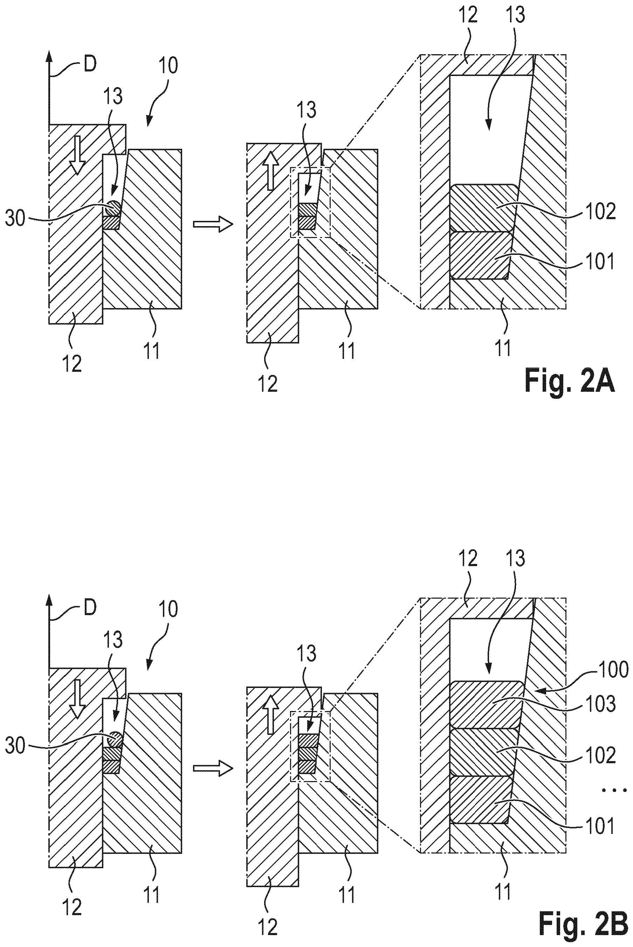

Das Unterwerkzeug 11 kann vorzugsweise eine Form bzw. Kavität 13 aufweisen, welche im Wesentlichen einer Außenform und einem Volumen einer zu fertigenden Spule 100 (s. Fig. 2) entspricht. Im dargestellten Ausführungsbeispiel bildet das Unterwerkzeug 11 im Zusammenwirken mit dem Oberwerkzeug 12 die Gesenkvorrichtung 10 aus.

Das Unterwerkzeug 11 ist entlang einer Drehachse D drehbar ausgestaltet, sodass ein in das Unterwerkzeug 11 eingesetzter bzw. positionierter Zuführdraht 30 durch eine Drehbewegung des Unterwerkzeugs 11 in der Kavität des Unterwerkzeugs 11 aufgewickelt bzw. von einer nicht dargestellten Zuführrolle des Zuführdrahts 30 abgewickelt werden kann.

Durch die Drehbewegung des Unterwerkzeugs kann der Zuführdraht in der Form bzw. einer Kavität oder Nut des Unterwerkzeugs entsprechend einem Verlauf der Kavität vorgebogen werden und somit beispielsweise in eine Kurvenform oder eine Kantenform im Wesentlichen unter Beibehaltung des ursprünglichen Querschnitts gebogen werden.

Die Drehbewegung des Unterwerkzeugs kann beispielsweise entlang einer Drehachse erfolgen, welche im Wesentlichen orthogonal zu einer Zuführrichtung des Zuführdrahts ausgerichtet ist. Je nach Ausgestaltung kann die Zuführrichtung in einem Winkel gegenüber der Drehachse gerichtet sein.

In einem weiteren Schritt, welcher in Fig. 1B gezeigt ist, wird die durch den Zuführdraht 30 ausgebildete halbe Spulenwindung 101 durch das Oberwerkzeug 12 zu einem Windungsabschnitt 40 quer zur Zuführrichtung Z des Zuführdrahtes 30 umgeformt. Diese Umformung erfolgt im Wesentlichen parallel zur Drehachse D des Unterwerkzeugs 11 und prägt dem in der Form bzw. der Kavität 13 positionierten Zuführdraht 30 einen Endquerschnitt auf. Der derart umgeformte Zuführdraht 30 entspricht dem Windungsabschnitt 40, welcher im dargestellten Ausführungsbeispiel als ein Flachdraht geformt ist.

Nach dem Pressen wird das Oberwerkzeug 12 vom Unterwerkzeug 11 beabstandet. Das Oberwerkzeug 12 kann hierbei stationär bzw. drehfest angeordnet sein und lediglich für die Umformung oder das Pressen zuständig sein. Die Pressbewegung des Oberwerkzeugs 12 ist durch Pfeile in den Querschnittsansichten der Fig. 1A und Fig. 1B veranschaulicht.

Anschließend wird der Zuführdraht 30 unter Ausbildung einer weiteren halben Spulenwindung in die umlaufende Kavität 13 des Unterwerkzeugs 11 angeordnet. Das Oberwerkzeug 12 kann anschließend dem angeordneten Zuführdraht 30 einen finalen Querschnitt aufprägen bzw. diesen erneut verpressen.

Für die Ausbildung einer vollständigen Spulenwindung 101 der Spule 100 wird der Zuführdraht 30 um eine halbe Wicklung abgewickelt, durch das Oberwerkzeug 12 verpresst, erneut um eine halbe Wicklung abgewickelt und erneut durch das Oberwerkzeug 12 verpresst. Diese Schritte können beliebig wiederholt werden, um eine gewünschte Wicklungszahl der Spule 100 zu realisieren. Die Spule 100 wird hierbei mit Windungsabschnitten 40 kontinuierlich und ohne Materialtrennung oder Materialabtrag durch Abwickeln des Zuführdrahts 30 in der Form bzw. Kavität 13 und dann durch sequentielles Umformen mittels des Oberwerkzeugs 12 hergestellt. Dabei wird Stück für Stück immer nur die Länge einer halben Windung der Spule 100 abgewickelt und dann jeweils vom runden zum flachen Querschnitt umgeformt bzw. gepresst.

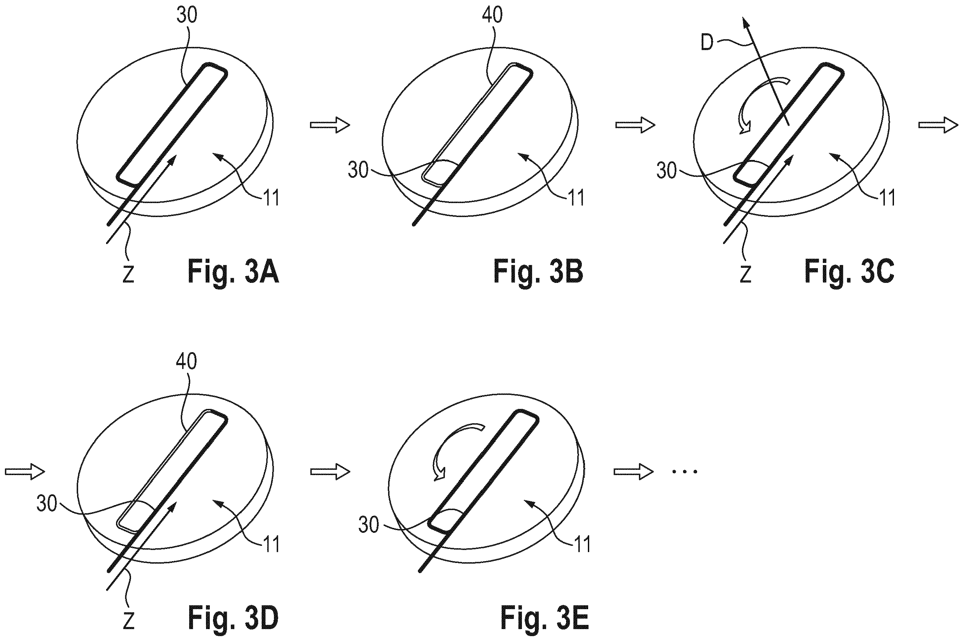

Im dargestellten Ausführungsbeispiel vollführt das Oberwerkzeug 12 bzw. das Presswerkzeug einen Hub pro halbe Windung. Nach jedem Hub wird das Unterwerkzeug 11 um 180° entlang der Drehachse D gedreht. Nach jeweils zwei halben Umdrehungen bzw. Windungen und Pressvorgängen entsteht somit Lage für Lage der Spule 100. Dieser Vorgang ist für die ersten drei Lagen bzw. Windungen 101, 102, 103 der Spule 100 in der Fig. 2A, Fig. 2B und der Fig. 3A-3E illustriert.

Da ein Übergang von einem umgeformten Zuführdraht 40 bzw. Windungsabschnitt 40 der Spule 100 und dem ursprünglichen Zuführdraht 30 in der Kavität 13 des Unterwerkzeugs 11 liegt, kann das Unterwerkzeug 11 das Abwickeln bzw. das Zuführen des Zuführdrahts 30 entlang der Zuführrichtung Z übernehmen.

In der Fig. 1A und Fig. 1B ist die Herstellung einer ersten Windung 101 der Spule 100 verdeutlicht. Die Fig. 2A zeigt in einer Schnittdarstellung der Gesenkvorrichtung 10 die Herstellung einer zweiten Spulenwindung 102 der Spule 100. Entsprechend hierzu ist auch die Ausbildung einer dritten Spulenwindung 103 der Spule 100, welche durch die Fig. 2B gezeigt ist. Im dargestellten Ausführungsbeispiel weist die Spule 100 die drei Spulenwindungen 101, 102, 103 auf und ist somit fertiggestellt.

Der Vorgang zum Herstellen der zweiten Lage bzw. der zweiten Spulenwindung 102 ist in der Fig. 3 schrittweise verdeutlicht. Die Fig. 3A zeigt einen Schritt, bei dem der Zuführdraht 30 durch das Unterwerkzeug 11 in die Kavität 13 entlang der Zuführrichtung Z gezogen wird.

Die Fig. 3B zeigt den Zustand des Unterwerkzeugs 11 nach dem Umformen durch das Oberwerkzeug 12, welches der Übersicht halber hier nicht gezeigt ist. Eine halbe Spulenwindung ist somit in Form eines Flachdrahts bzw. als ein umgeformter Windungsabschnitt 40 ausgestaltet.

In der Fig. 3C wird das Unterwerkzeug 11 entlang der Drehachse D um 180° rotiert, wodurch weiterer Zuführdraht 30 in die Kavität 13 gezogen wird. In einem anschließenden Schritt des Verfahrens, welcher in Fig. 3D gezeigt ist, wird eine halbe Spulenwindung des Zuführdrahts 30 erneut durch das Oberwerkzeug 12 umgeformt. In der Fig. 3E vollführt das Unterwerkzeug 11 erneut eine Drehbewegung entlang der Drehachse D, um weiteren Zuführdraht 30 einzuziehen. Dieser Ablauf kann anschließend beliebig wiederholt werden, um Spulen 100 mit einer beliebigen Windungszahl aus Flachdraht oder einem anderen Querschnitt herzustellen, welcher von der runden Querschnittsform des Zuführdrahts 30 abweicht.

### Bezugszeichenliste

- 100: Spule
- 101: erste Spulenwindung
- 102: zweite Spulenwindung
- 103: dritte Spulenwindung

- 10: Gesenkvorrichtung
- 11: Unterwerkzeug
- 12: Oberwerkzeug
- 13: Kavität des Unterwerkzeugs

- 30: Zuführdraht

- 40: umgeformter Zuführdraht / Windungsabschnitt

- D: Drehachse des Unterwerkzeugs
- Z: Zuführrichtung des Zuführdrahts

## Patentansprüche

1. Verfahren zum Herstellen einer Spulenwindung (101), insbesondere in Form von Flachdraht, wobei ein Zuführdraht (30) in eine umlaufende Kavität (13) eines Unterwerkzeugs (11) unter Ausbildung einer halben Spulenwindung angeordnet wird, wobei die durch den Zuführdraht (30) ausgebildete halbe Spulenwindung durch ein Oberwerkzeug (12) zu einem Windungsabschnitt quer zur Zuführrichtung (Z) des Zuführdrahtes (30) umgeformt wird, und wobei nach dem Pressen das Oberwerkzeug (12) vom Unterwerkzeug (11) beabstandet und der Zuführdraht (30) unter Ausbildung einer weiteren halben Spulenwindung in die umlaufende Kavität (13) des Unterwerkzeugs (11) angeordnet wird.

2. Verfahren nach Anspruch 1, wobei der Zuführdraht (30) in die umlaufende Kavität (13) des Unterwerkzeugs (11) unter Ausbildung einer halben Spulenwindung durch eine Drehung des Unterwerkzeugs (11) geführt oder gezogen wird.

3. Verfahren nach Anspruch 1 oder 2, wobei das Umformen durch das Oberwerkzeug (12) in Form einer Kaltumformung durchgeführt wird, wobei für das Umformen durch das Oberwerkzeug (12) ein unter dem Zuführdraht (30) bereits umgeformter Windungsabschnitt oder ein Abschnitt des Unterwerkzeugs (11) als Widerlager verwendet wird.

4. Verfahren nach einem der Ansprüche 1 bis 3, wobei das Zuführen oder Einziehen des Zuführdrahts (30) und das Umformen des Zuführdrahts (30) bis zum Fertigstellen einer Spule (100) wiederholt wird.

5. Verfahren nach einem der Ansprüche 1 bis 4, wobei durch das Umformen ein flacher Querschnitt des Windungsabschnitts, insbesondere mit einer quadratischen Form oder ovalen Form oder Trapezform, eingestellt wird.

6. Verfahren nach einem der Ansprüche 1 bis 5, wobei eine konstante oder variable Querschnittsfläche des mindestens einen Windungsabschnitts einer Spulenwindung (101) durch das Umformen mittels des Oberwerkzeugs (12) eingestellt wird.

7. Verfahren nach einem der Ansprüche 1 bis 6, wobei das Umformen durch das Oberwerkzeug (12) mit oder ohne einen Schmierstoff ausgeführt wird, wobei der Zuführdraht (30) aus Aluminium oder aus Kupfer oder aus Stahl oder aus einer Metalllegierung unter Ausbildung einer halben Spulenwindung (101) in der umlaufenden Kavität (13) des Unterwerkzeugs (11) angeordnet wird.

8. Verfahren nach einem der Ansprüche 1 bis 7, wobei das Oberwerkzeug (12) und das Unterwerkzeug (11) als eine Gesenkvorrichtung (10) ausgestaltet sind.

9. Spule (100), aufweisend mindestens eine Spulenwindung (101, 102, 103), welche durch ein Verfahren gemäß einem der vorhergehenden Ansprüche hergestellt ist.

## Claims

1. Method for producing a coil winding (101), in particular in the form of flat wire, wherein a supply wire (30) is disposed in an encircling cavity (13) of a lower tool (11) while forming half a coil winding, wherein the half a coil winding formed by the supply wire (30) is formed by an upper tool (12) into a winding portion which is transverse to the supply direction (Z) of the supply wire (30) and wherein, after pressing, the upper tool (12) is spaced apart from the lower tool (11), and the supply wire (30) is disposed in the encircling cavity (13) of the lower tool (11) while forming a further half a coil winding.

2. Method according to Claim 1, wherein the supply wire (30) is guided or pulled into the encircling cavity (13) of the lower tool (11) by a rotation of the lower tool (11), while forming half a coil winding.

3. Method according to Claim 1 or 2, wherein the forming by the upper tool (12) is carried out as cold forming, wherein an already formed winding portion below the supply wire (30), or a portion of the lower tool (11), is used as a counter bearing for forming by the upper tool (12).

4. Method according to one of Claims 1 to 3, wherein the supply or the intake of the supply wire (30) and the forming of the supply wire (30) is repeated until a coil (100) has been completed.

5. Method according to one of Claims 1 to 4, wherein a flat cross section of the winding portion, in particular having a square shape or an oval shape or a trapezoidal shape, is established by the forming.

6. Method according to one of Claims 1 to 5, wherein a constant or variable cross-section area of the at least one winding portion of a coil winding (101) is established by the forming by means of the upper tool (12).

7. Method according to one of Claims 1 to 6, wherein the forming by the upper tool (12) is carried out with or without a lubricant, wherein the supply wire (30) of aluminium or copper or of steel or of a metal alloy is disposed in the encircling cavity (13) of the lower tool (11) while forming half a coil winding (101).

8. Method according to one of Claims 1 to 7, wherein the upper tool (12) and the lower tool (11) are designed as a die device (10).

9. Coil (100) having at least one coil winding (101, 102, 103) which is produced by a method according to one of the preceding claims.

## Revendications

1. Procédé de fabrication d'un enroulement de bobine (101), notamment sous forme de fil plat, dans lequel un fil d'amenée (30) est agencé dans une cavité périphérique (13) d'un outil inférieur (11) en réalisant un demi-enroulement de bobine, dans lequel le demi-enroulement de bobine réalisé par le fil d'amenée (30) est façonné par un outil supérieur (12) en une section d'enroulement transversale à la direction d'amenée (Z) du fil d'amenée (30), et dans lequel, après le pressage, l'outil supérieur (12) est espacé de l'outil inférieur (11) et le fil d'amenée (30) est agencé dans la cavité périphérique (13) de l'outil inférieur (11) en réalisant un autre demi-enroulement de bobine.

2. Procédé selon la revendication 1, dans lequel le fil d'amenée (30) est guidé ou tiré dans la cavité périphérique (13) de l'outil inférieur (11) en réalisant un demi-enroulement de bobine par une rotation de l'outil inférieur (11).

3. Procédé selon la revendication 1 ou 2, dans lequel le façonnage par l'outil supérieur (12) est effectué sous la forme d'un façonnage à froid, dans lequel une section d'enroulement déjà façonnée sous le fil d'amenée (30) ou une section de l'outil inférieur (11) est utilisée en tant que contre-appui pour le façonnage par l'outil supérieur (12).

4. Procédé selon l'une quelconque des revendications 1 à 3, dans lequel l'amenée ou le tirage du fil d'amenée (30) et le façonnage du fil d'amenée (30) sont répétés jusqu'à l'achèvement d'une bobine (100).

5. Procédé selon l'une quelconque des revendications 1 à 4, dans lequel une section transversale plate de la section d'enroulement, notamment avec une forme carrée ou une forme ovale ou une forme trapézoïdale, est ajustée par le façonnage.

6. Procédé selon l'une quelconque des revendications 1 à 5, dans lequel une surface de section transversale constante ou variable de l'au moins une section d'enroulement d'un enroulement de bobine (101) est ajustée par le façonnage au moyen de l'outil supérieur (12).

7. Procédé selon l'une quelconque des revendications 1 à 6, dans lequel le façonnage est réalisé par l'outil supérieur (12) avec ou sans lubrifiant, dans lequel le fil d'amenée (30) en aluminium ou en cuivre ou en acier ou en un alliage métallique est agencé dans la cavité périphérique (13) de l'outil inférieur (11) en réalisant un demi-enroulement de bobine (101).

8. Procédé selon l'une quelconque des revendications 1 à 7, dans lequel l'outil supérieur (12) et l'outil inférieur (11) sont conçus sous la forme d'un dispositif de matriçage (10).

9. Bobine (100), présentant au moins un enroulement de bobine (101, 102, 103) qui est fabriqué par un procédé selon l'une quelconque des revendications précédentes.
